# EUROPEAN PATENT APPLICATION

(11) **EP 4 458 592 A1**
(43) Date of publication of application: **06.11.2024**
(21) Application number: 22915230.1
(22) Date of filing: 30.12.2022
(51) Int. Cl.: B60G 17/08, F15B 1/02, F16F 9/10

(54) **HYDRAULIC INTEGRATED CONTROL MODULE, HYDRAULIC SUSPENSION SYSTEM HAVING HYDRAULIC INTEGRATED CONTROL MODULE, AND VEHICLE**

(30) Priority: 30.12.2021 CN 202111651770
(71) Applicant: BYD Company Limited, Shenzhen, Guangdong 518118 (CN)
(72) Inventor: XU, Haolun, Shenzhen, Guangdong 518118 (CN); LIAO, Yinsheng, Shenzhen, Guangdong 518118 (CN); HUANG, Taishuo, Shenzhen, Guangdong 518118 (CN); ZHANG, Hongzhou, Shenzhen, Guangdong 518118 (CN); HUANG, Fei, Shenzhen, Guangdong 518118 (CN)
(74) Representative: Arnold & Siedsma
(86) International application number: PCT/CN2022/144182
(87) International publication number: WO 2023/125983

(57) **Abstract**

A hydraulic integrated control module (100) includes: an integrated base (32), a liquid reservoir (1), a control valve (12), and an accumulator module. The integrated base (32) is provided with an oil channel (44). An outer peripheral wall of the integrated base (32) is provided with an external connection port (320) connected to the oil channel (44), and the external connection port (320) is configured to connect to the shock absorber (200). The liquid reservoir (1) is arranged on the integrated base (32), and the liquid reservoir (1) is connected to the oil channel (44). The control valve (12) is connected in series in the oil channel (44) to control connection or disconnection of the oil channel (44). The accumulator module is arranged on the integrated base (32), and is connected to the oil channel (44). The accumulator module is configured to adjust an amount of oil in the oil channel (44).

## Description

### CROSS-REFERENCE TO RELATED APPLICATIONS

The present disclosure is proposed based on Chinese Patent Application No. 202111651770.9 filed on December 30, 2021, and claims priority to this Chinese Patent Application, which is incorporated herein by reference in its entirety.

### FIELD

The present disclosure relates to the field of vehicles, and more specifically, to a hydraulic integrated control module, a hydraulic suspension system having the same, and a vehicle.

### BACKGROUND

A suspension is an apparatus that transmits the interaction force between the body and the axle of a vehicle, and is one of the four major components of an automobile and a key component that affects the driving performance of an automobile. A suspension can transmit the force and torque fed back from the road surface, attenuate the shock of the wheel, alleviate the impact, improve driver driving experience, and enable a vehicle to obtain ideal sports features and stable driving capability. A suspension in related art mostly includes a spring, a guide mechanism, a shock absorber, and the like. A damping coefficient and a spring stiffness of the shock absorber are fixed, making it difficult to balance comfort and operation stability. In some suspensions in related art, hydraulic pressure is used to adjust stiffness and/or damping of the suspensions. However, since various pipes need to be connected to circulate oil, the suspensions are large and connection positions are prone to leakage risks.

### SUMMARY

The present disclosure is intended to resolve one of technical problems in the related art at least to some extent.

To this end, one purpose of this application is to propose a hydraulic integrated control module. The entire hydraulic integrated control module is reduced in volume and no complicated oil channels need to be connected, thereby reducing leakage risks.

This application also proposes a hydraulic suspension system having the above-mentioned hydraulic integrated control module, which can improve the operation stability of a vehicle without compromising the comfort of the vehicle.

This application also proposes a vehicle having the above-mentioned hydraulic suspension system.

The hydraulic integrated control module according to the embodiments of the present disclosure includes: an integrated base, the integrated base being provided with an oil channel, an outer peripheral wall of the integrated base is provided with an external connection port connected to the oil channel, and the external connection port being configured to connect to a shock absorber; a liquid reservoir, the liquid reservoir being arranged on the integrated base, and the liquid reservoir being connected to the oil channel; a control valve, connected in series in the oil channel to control connection or disconnection of the oil channel; and an accumulator module, the accumulator module being arranged on the integrated base, the accumulator module being connected to the oil channel, and the accumulator module being configured to adjust an amount of oil in the oil channel.

According to the hydraulic integrated control module in the embodiments of the present disclosure, the oil channel is integrated into the integrated base, so that the liquid reservoir and the accumulator module are arranged on the integrated base to connect to the oil channel. In this way, the oil channel, the liquid reservoir, and the accumulator module are integrated together to reduce the volume of the entire hydraulic integrated control module, no complex oil channels need to be connected, and leakage risks are reduced. When used in vehicles, the hydraulic integrated control module effectively solves the contradiction between vehicle comfort and operation stability.

In some embodiments of the application, the integrated base is provided with a first branch, and the first branch is connected to the oil channel; and the accumulator module includes a stiffness adjustment accumulator and a stiffness adjustment valve, the stiffness adjustment valve is connected in series on the first branch to connect or disconnect the first branch, and the stiffness adjustment accumulator is arranged on the integrated base and is connected to the first branch.

In some embodiments of the application, the stiffness adjustment accumulator is arranged on an arrangement plane of the liquid reservoir on the integrated base.

In some embodiments of the application, the accumulator module includes a damping adjustment valve and a damping accumulator, and the damping adjustment valve is connected in series to the oil channel to adjust damping of the oil channel; and the damping accumulator is arranged on the integrated base and is connected to the oil channel.

In some embodiments of the application, an arrangement plane of the damping accumulator on the integrated base is perpendicular to the arrangement plane of the liquid reservoir on the integrated base, and the damping accumulator and the damping adjustment valve are located on a same arrangement plane.

In some embodiments of the application, the integrated base is provided with a third branch and a fourth branch, the third branch is connected to the oil channel and a liquid outlet of the liquid reservoir, the fourth branch is connected to the oil channel and a liquid inlet of the liquid reservoir, and a control pump is provided on the third branch to guide oil in the liquid reservoir to the oil channel.

In some embodiments of the application, an oil return valve for connecting or disconnecting the fourth branch is connected in series on the fourth branch.

In some embodiments of the application, a one-way valve is provided on the third branch, and the one-way valve is configured to unidirectionally guide oil to the oil channel.

In some embodiments of the application, a pressure stabilizing accumulator is provided on the third branch, and the pressure stabilizing accumulator is arranged on the integrated base and is arranged on the arrangement plane of the liquid reservoir on the integrated base.

In some embodiments of the application, the hydraulic integrated control module further includes a signal receiver, the signal receiver being arranged on the integrated base, and the signal receiver cooperating with the control valve to control an operating state of the control valve.

In some embodiments of the application, the control valve is a solenoid valve, and the signal receiver is a coil.

The hydraulic suspension system according to the embodiment of the present disclosure includes: multiple hydraulic integrated control modules, the hydraulic integrated control module being any one of the hydraulic integrated control modules according to this application; and multiple shock absorbers, the shock absorber including a first cylinder, a piston, and a piston rod, the piston being located in the first cylinder to cooperate with the first cylinder to define an upper chamber and a lower chamber, the piston rod being connected to the piston and an upper end of the piston rod being configured to connect to a vehicle body, the multiple shock absorbers being arranged in one-to-one correspondence with the multiple hydraulic integrated control modules, and the external connection port of each of the integrated bases being connected to the lower chamber.

According to the hydraulic suspension system in the embodiments of the present disclosure, the oil channel is integrated into the integrated base, so that the liquid reservoir and the accumulator module are arranged on the integrated base to connect to the oil channel. In this way, the oil channel, the liquid reservoir, and the accumulator module are integrated together to reduce the volume of the entire hydraulic integrated control module, no complex oil channels need to be connected, and leakage risks are reduced. When used in vehicles, the hydraulic suspension system effectively solves the contradiction between vehicle comfort and operation stability.

The vehicle according to the embodiments of the present disclosure includes: a vehicle body and a control unit; and a hydraulic suspension system, the hydraulic suspension system being the hydraulic suspension system according to the embodiments of the present disclosure, the upper end of each piston rod being connected to the vehicle body, and the control valves of the multiple hydraulic integrated control modules being respectively connected to the control unit of the vehicle.

The vehicle according to the embodiments of the present disclosure includes multiple independently controlled hydraulic integrated control modules, and can adjust the height of the vehicle body and the suspension stiffness at different positions according to the actual condition, so that the hydraulic suspension system can meet different needs and can achieve anti-roll and anti-pitch, can improve the operation stability of the vehicle and effectively solve the contradiction between vehicle comfort and operation stability. The oil channel is integrated into the integrated base, so that the liquid reservoir and the accumulator module are arranged on the integrated base to connect to the oil channel. In this way, the oil channel, the liquid reservoir, and the accumulator module are integrated together to reduce the volume of the entire hydraulic integrated control module, no complex oil channels need to be connected, and leakage risks are reduced.

Other aspects and advantages of this application will be given in the following description, some of which will become apparent from the following description or may be learned from practices of this application.

### BRIEF DESCRIPTION OF THE DRAWINGS

FIG. 1 to FIG. 3 are schematic diagrams of an integrated oil channel module at different angles according to an embodiment of the present disclosure;
FIG. 4 is an oil channel diagram of an integrated oil circuit module according to an embodiment of the present disclosure;
FIG. 5 is a schematic diagram of a hydraulic suspension system according to some embodiments of the present disclosure;
FIG. 6 is a schematic diagram of a hydraulic suspension system according to some other embodiments of the present disclosure;
FIG. 7 is a schematic diagram of a left front shock absorber assembly and a right front shock absorber assembly according to an embodiment of the present disclosure;
FIG. 8 is a cross-sectional view of a shock absorber assembly shown in FIG. 7;
FIG. 9 is a cross-sectional view of a central control cylinder according to an embodiment of the present disclosure;
FIG. 10 is a three-dimensional view of a central control cylinder according to an embodiment of the present disclosure; and
FIG. 11 is a schematic diagram of a metal corrugated pipe accumulator according to an embodiment of the present disclosure.

### Descriptions of reference numerals:

Hydraulic suspension system 1000. Control unit 2000.
Hydraulic integrated control module 100, and liquid reservoir 1.
Shock absorber assembly 2, shock absorber 200, first cylinder 201, upper chamber 2011, lower chamber 2012, piston 202, piston rod 203, oil liquid channel 204, and damping spring 205.
Damping adjustment valve 8.
Damping accumulator 9.
Stiffness adjustment accumulator 10, and metal corrugated pipe 101.
Stiffness adjustment valve 11.
Control valve 12.

Central control cylinder 24, second cylinder 240, moving part 241, moving body part 2410, intermediate contact part 2411, first chamber 243, second chamber 244, third chamber 245, fourth chamber 246, first return spring 247, second return spring 248, guide component 249, a first guide piece 2490, and second guide piece 2491.

Control pump 26, control valve body 260, drive motor 261, oil return valve 27, one-way valve 28, pressure stabilizing accumulator 29, pressure reducing accumulator 30, pressure relief valve 31, integrated base 32, external connection port 320, and end cap 42.

Coil 33, pressure sensor 34, left front acceleration sensor 35, right front acceleration sensor 36, rear vehicle body acceleration sensor 37, left front horizontal height sensor 38, right front horizontal height sensor 39, left rear horizontal height sensor 40, right rear horizontal height sensor 41, oil channel 44, third branch 45, and fourth branch 46.

### DETAILED DESCRIPTION

Embodiments of this application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, and are intended to explain this application and cannot be construed as a limitation to this application.

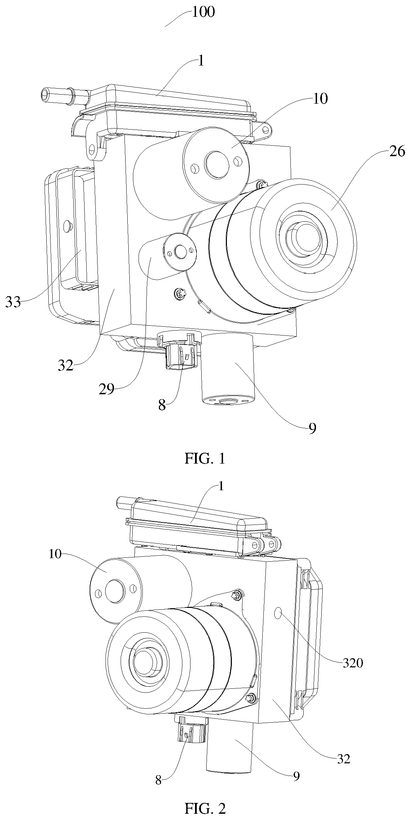

A hydraulic integrated control module 100 according to the embodiments of the present disclosure is described with reference to FIG. 1 to FIG. 4, and includes: an integrated base 32, a liquid reservoir 1, a control valve 12, and an accumulator module. The integrated base 32 is provided with an oil channel 44. An outer peripheral wall of the integrated base 32 is provided with an external connection port 320 connected to the oil channel 44, and the external connection port 320 is configured to connect to the shock absorber 200. The liquid reservoir 1 is arranged on the integrated base 32, and the liquid reservoir 1 is connected to the oil channel 44. The control valve 12 is connected in series in the oil channel 44 to control connection or disconnection of the oil channel 44. The accumulator module is arranged on the integrated base 32, and is connected to the oil channel 44. The accumulator module is configured to adjust an amount of oil in the oil channel 44.

Specifically, oil is stored in the liquid reservoir 1, and the oil in the liquid reservoir 1 can be discharged to the oil channel 44. When the hydraulic integrated control module 100 is not installed on the vehicle, the control valve 12 is in a closed state to block the oil channel 44 to prevent oil from being discharged from the external connection port 320 and causing fluid leakage.

It can be understood that the accumulator module functions for energy storage, that is, oil can flow into the accumulator module to store energy. When the hydraulic integrated control module 100 has the need, the oil in the accumulator module is discharged to the oil channel 44.

It should be noted that the accumulator module being configured to adjust the amount of oil in the oil channel 44 means that the accumulator module can adjust the amount of oil in the oil channel 44 to adjust the damping of the oil channel 44 and/or the accumulator module can be connected to or disconnected from the oil channel 44 to adjust the stiffness of the oil channel 44.

When the hydraulic integrated control module 100 is installed on the vehicle, the external connection port 320 is connected to the shock absorber 200 so that the oil in the oil channel 44 can be discharged to the shock absorber 200. The control valve 12 is electrically connected to a control unit of the vehicle to open or close based on a received signal. Specifically, the shock absorber 200 includes a first cylinder 201, a piston 202, and a piston rod 203. The first cylinder 201 is configured to connect to an axle of the vehicle. The piston 202 is located in the first cylinder 201 and cooperates with the first cylinder 201 to define an upper chamber 2011 and a lower chamber 2012, one end of the piston rod 203 is connected to the piston 202, the piston rod 203 is configured to connect to the vehicle body, and the external connection port 320 is connected to the lower chamber 2012.

When the control valve 12 is opened, the oil in the liquid reservoir 1 and/or the accumulator module can be discharged to the shock absorber 200. When the oil is discharged to the shock absorber 200, the increase of oil in the lower chamber 2012 of the shock absorber 200 causes the piston rod 203 to move upward, thereby achieving the purpose of lifting the vehicle body. When the oil in the lower chamber 2012 of the shock absorber 200 is discharged back to the hydraulic integrated control module 100 through the oil channel 44, the hydraulic pressure in the lower chamber 2012 of the shock absorber 200 decreases, causing the piston 202 to move downward. The downward movement of the piston 202 drives the piston rod 203 to move downward, so as to drive the vehicle body to move downward, thereby achieving the purpose of lowering the height of the vehicle body.

A vehicle encounters a variety of road conditions during driving. Once a suspension system of a vehicle in related art is selected, the suspension system cannot be adjusted while the vehicle is driving. Therefore, the traditional suspension can only ensure that the vehicle achieves optimal performance matching under specific road and speed conditions, and can only passively withstand the force of the ground on the vehicle body, and cannot change suspension parameters according to different roads and vehicle speeds, let alone actively control force of the ground on the vehicle body.

When the hydraulic integrated control module 100 according to the embodiments of the present disclosure is applied to a vehicle, the height of the vehicle body can be adjusted according to road conditions or the like. For example, when passing through a relatively rugged mountain road, the vehicle can enter the lift mode, which can improve the center of mass of the vehicle and improve vehicle driving stability. When it is necessary to reduce the impact of the vehicle body on the driving speed, it can enter the height reduction mode to lower the center of mass of the vehicle. Certainly, it can be understood that the above is only an exemplary description, and the height of the vehicle body can also be adjusted according to actual needs during driving.

When the accumulator module is used to adjust the damping and/or stiffness of the oil channel 44, the damping and/or stiffness of the shock absorber 200 is adjusted, so that the adjustment can be made according to an actual condition, such as a road condition, to ensure that the damping and/or stiffness can meet the shock reduction requirement, and effectively solve the contradiction between vehicle comfort and operation stability.

According to the hydraulic integrated control module 100 in the embodiments of the present disclosure, the oil channel 44 is integrated into the integrated base 32, so that the liquid reservoir 1 and the accumulator module are arranged on the integrated base 32 to connect to the oil channel 44. In this way, the oil channel 44, the liquid reservoir 1, and the accumulator module are integrated together to reduce the volume of the entire hydraulic integrated control module 100, no complex oil channels need to be connected, and leakage risks are reduced.

In some embodiments of the application, the integrated base 32 is provided with a first branch, and the first branch is connected to the oil channel 44. The accumulator module includes a stiffness adjustment accumulator 10 and a stiffness adjustment valve 11, the stiffness adjustment valve 11 is connected in series on the first branch to connect or disconnect the first branch, and the stiffness adjustment accumulator 10 is arranged on the integrated base 32 and is connected to the first branch. Specifically, the stiffness adjustment valve 11 is electrically connected to the control unit of the vehicle.

When the stiffness needs to be increased, the stiffness adjustment valve 11 can be closed, causing the stiffness adjustment accumulator 10 to be disconnected from the shock absorber 200, thereby increasing the stiffness of the shock absorber 200. For example, when greater stiffness needs to be provided in an anti-dive condition during brake and a cornering anti-roll condition, the stiffness adjustment valve 11 can be closed.

Optionally, the stiffness adjustment accumulator 10 is arranged on an arrangement plane of the liquid reservoir 1 on the integrated base 32. That is, the stiffness adjustment accumulator 10 and the liquid reservoir 1 are arranged on a same arrangement plane, so that space can be reasonably utilized and the compactness of the hydraulic integrated control module 100 can be improved.

In some embodiments of the application, the accumulator module includes a damping adjustment valve 8 and a damping accumulator 9, and the damping adjustment valve 8 is connected in series to the oil channel 44 to adjust damping of the oil channel 44. The damping accumulator 9 is arranged on the integrated base 32 and is connected to the oil channel 44. It should be noted that the damping adjustment valve 8 can adjust the amount of oil of the corresponding oil channel 44, and therefore can adjust the damping of the corresponding oil channel 44 to adjust the damping of the shock absorber 200, so that the damping of the shock absorber 200 can be adjusted according to actual conditions, for example, according to road conditions, to ensure that the damping of the shock absorber 200 can meet the shock reduction requirement, and effectively solve the contradiction between vehicle comfort and operation stability. In some examples of this application, the damping adjustment valve 8 includes a first motor and a first valve body. The first motor can control movement of a valve in the first valve body to change a flow area of the first valve body to adjust the flow rate.

Optionally, an arrangement plane of the damping accumulator 9 on the integrated base 32 is perpendicular to the arrangement plane of the liquid reservoir 1 on the integrated base 32, and the damping accumulator 9 and the damping adjustment valve 8 are located on a same arrangement plane. Therefore, the space of the integrated base 32 can be rationally utilized.

In some embodiments of the application, the integrated base 32 is provided with a third branch 45 and a fourth branch 46, the third branch 45 is connected to the oil channel 44 and a liquid outlet of the liquid reservoir 1, the fourth branch 46 is connected to the oil channel 44 and a liquid inlet of the liquid reservoir 1, and a control pump 26 is provided on the third branch 45 to guide oil in the liquid reservoir 1 to the oil channel 44. That is, the liquid reservoir 11 has an independent liquid return channel (that is, the fourth branch 46) and liquid discharge channel (that is, the third branch 45), so that two independent channels are arranged to ensure that liquid discharge and liquid return are performed reliably.

Optionally, an oil return valve 27 for connecting or disconnecting the fourth branch 46 is connected in series on the fourth branch 46. When liquid discharge is required, the control pump 26 is opened and the oil return valve 27 is in a closed state, and the control pump 26 guides the oil to the oil channel 44. When liquid return is required, the control pump 26 is closed and the oil return valve 27 is opened, and the oil in the oil channel 44 can flow to the liquid reservoir 11 through the oil return valve 27. In this way, two independent channels are arranged to ensure that liquid discharge and liquid return are performed reliably.

In some examples of this application, as shown in FIG. 1 and FIG. 2, the control pump 26 includes a control valve body 260 and a drive motor 261. The drive motor 261 is electrically connected to a valve in the control valve body 260, and the drive motor 261 rotates to control the valve to rotate to open or close the control pump 26. Therefore, the drive motor 261 and the valve cooperate to open or close the control pump 26, the relatively reliable operation of the control pump 26 can be ensured and the impact of oil on the opening or closing of the control pump 26 can be reduced.

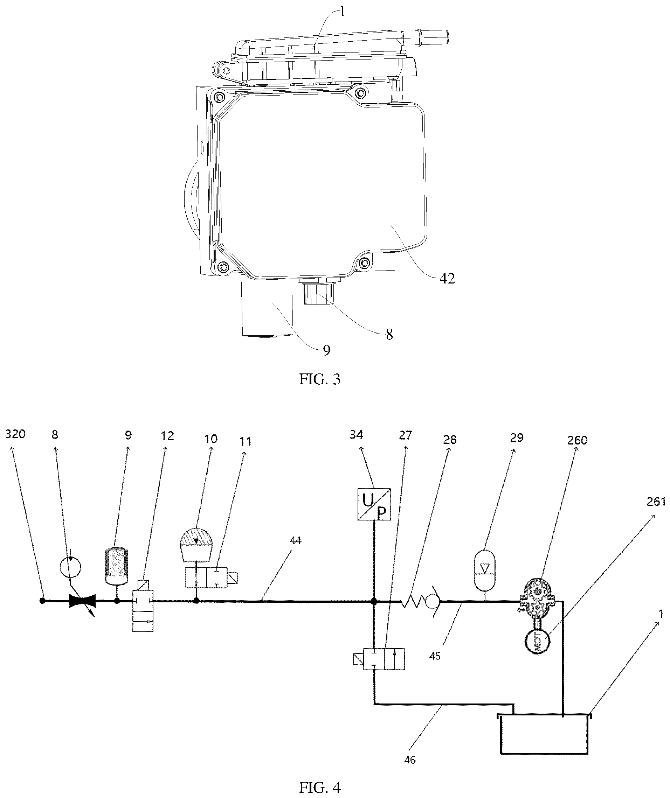

In some examples of the application, as shown in FIG. 4, a one-way valve 28 is provided on the third branch 45, and the one-way valve 28 is configured to unidirectionally guide oil to the oil channel 44. Therefore, during liquid return, the existence of the one-way valve 28 can effectively avoid that the oil flows to the control pump 26, and avoid that the oil flows to the liquid outlet through the control pump 26 when an accident occurs in the control pump 26.

In some embodiments of the application, as shown in FIG. 4, a pressure stabilizing accumulator 29 is provided on the third branch 45, and the pressure stabilizing accumulator 29 is arranged on the integrated base 32 and is arranged on the arrangement plane of the liquid reservoir 1 on the integrated base 32. Therefore, the pressure stabilizing accumulator 29 can stabilize and eliminate the flow fluctuation at the outlet end of the control pump 26, and the space arrangement can also be rationally utilized.

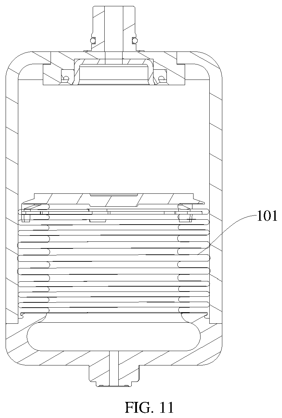

In some examples of this application, the pressure stabilizing accumulator 29 can be a metal corrugated pipe accumulator. As shown in FIG. 11, the metal corrugated pipe accumulator includes a cylinder assembly and a corrugated pipe assembly. The cylinder assembly includes an upper cover, a gasket, a cylinder barrel, a snap ring and a sealing ring. The corrugated pipe assembly includes a sealing cover, a guide ring, a corrugated pipe and a lower cover. The metal corrugated pipe accumulator can replace an air bag or a diaphragm, and a metal corrugated pipe 101 is used as a flexible separation element between fluid and gas. The corrugated pipe can be used over a very wide temperature range. The metal corrugated pipe is welded to other components and is therefore completely airtight. The metal corrugated pipe moves up and down inside the accumulator without any friction or wear and can run for a long time with just one adjustment.

In some embodiments of the application, the hydraulic integrated control module 100 further includes a signal receiver, the signal receiver being arranged on the integrated base 32, and the signal receiver cooperating with the control valve 12 to control an operating state of the control valve 12. This allows the hydraulic integrated control module 100 to receive signals independently, thereby facilitating the electrical connection between the hydraulic integrated control module 100 and the control unit of the vehicle.

Optionally, the control valve 12 is a solenoid valve, and the signal receiver is a coil, thereby making signal reception simple and reliable.

In some examples of this application, as shown in FIG. 1 to FIG. 3, the stiffness adjustment accumulator 10 and the pressure stabilizing accumulator 29 are in threaded connection to the integrated base 32 respectively and are fixed next to the control pump 26. The control pump 26 is fixed on one side of the integrated base 32 through three fixing nuts, and the stiffness adjustment valve 11 and the control valve 12 are fixed on the other side of the integrated base. The control valve 12 directly controls the opening and closing of the oil channel 44 in the integrated base 32.

The liquid reservoir 1 is fixed above the control pump 26. The damping adjustment valve 8 and the damping accumulator 9 are in threaded connection to the integrated base 32 and are fixed below the control pump 26.

In some embodiments of the present disclosure, the stiffness adjustment valve 11 and the control valve 12 are respectively solenoid valves. The integrated base 32 is provided with a coil 33 for inputting external signals. The coil 33 cooperates with the stiffness adjustment valve 11 and the control valve 12. That is, the coil 33 receives an external signal, and then the stiffness adjustment valve 11 and the control valve 12 are opened or closed according to the external signal. This makes the control method of the stiffness adjustment valve 11 and the control valve 12 simple, reliable and automatic. It can be understood that by controlling the magnitude and direction of a current flowing into the coil 33, operating states of the stiffness adjustment valve 11 and the control valve 12 can be controlled.

Optionally, the stiffness adjustment valve 11 and the control valve 12 are two-position two-way solenoid valves respectively. In some examples of this application, the oil return valve 27 is a solenoid valve and cooperates with the coil 33. Optionally, the oil return valve 27 is a two-position two-way solenoid valve.

In some examples of this application, as shown in FIG. 3, the stiffness adjustment valve 11, the control valve 12 and the oil return valve 27 are all placed in the end cap 42, so that by providing the end cap 42, the stiffness adjustment valve 11, the control valve 12 and the oil return valve 27 can be protected and integration can also be improved.

Certainly, it can be understood that the arrangement positions of the liquid reservoir 1, the stiffness adjustment accumulator 10, the stiffness adjustment valve 11 and the control valve 12 can be adjusted according to the actual condition, for example, according to the layout space of the entire vehicle. For example, in some examples of this application, the damping adjustment valve 8 is placed on the same side as the external connection port 320, and the damping accumulator 9 is placed on the opposite side of the liquid reservoir 1, so that the space of the external connection port 320 can be reasonably utilized to arrange the damping adjustment valve 8.

In some examples of this application, the damping adjustment valve 8 is placed on the opposite side of the liquid reservoir 1 and the damping accumulator 9 is arranged on the front side of the integrated base. In this case, the control pump 26, the pressure stabilizing accumulator 29, the stiffness adjustment accumulator 10, and the damping accumulator 9 are all arranged on the front side of the integrated base 32. This arrangement manner is conducive to saving the space around the integrated base 32 and rationally utilizing the surrounding region of the integrated base 32 for entire vehicle layout.

In some further examples of this application, the damping adjustment valve 8 is placed on the opposite side of the liquid reservoir 1, and the damping accumulator 9 is arranged on the opposite side of the external connection port 320. The damping accumulator 9 and the damping adjustment valve 8 are vertically arranged. This arrangement is conducive to the layout of the flow channels in the integrated base 32.

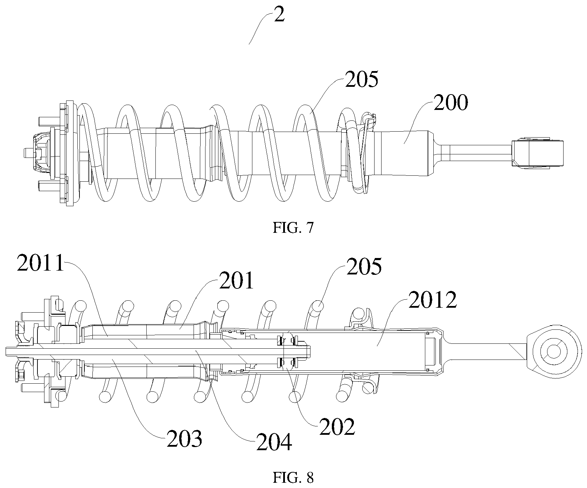

The following describes a hydraulic suspension system 1000 according to an embodiment of the present disclosure with reference to FIG. 1 to FIG. 11. The hydraulic suspension system 1000 is applied to a vehicle, and the hydraulic suspension system 1000 is configured to connect the axle and the body of the vehicle. It should be noted that in the description of this application, front refers to a direction toward the head of the vehicle, and rear refers to a direction toward the rear of the vehicle. In the forward direction, a right hand direction of a main driver is the right side, and a left hand direction of the main driver is the left side.

As shown in FIG. 1 to FIG. 10, the hydraulic suspension system 1000 according to an embodiment of the present disclosure includes: multiple hydraulic integrated control modules 100 and multiple shock absorbers 200, the multiple hydraulic integrated control modules 100 being respectively in one-to-one correspondence with multiple wheel hubs of the vehicle. Specifically, the multiple hydraulic integrated control modules 100 include a left front hydraulic integrated control module 100, a right front hydraulic integrated control module 100, a left rear hydraulic integrated control module 100, and a right rear hydraulic integrated control module 100. The left front hydraulic integrated control module 100 is configured to control the left front vehicle body, the right front hydraulic integrated control module 100 is configured to control the right front vehicle body, the left rear hydraulic integrated control module 100 is configured to control the left rear vehicle body, and the right rear hydraulic integrated control module 100 is configured to control the right rear vehicle body.

The shock absorber 200 includes a first cylinder 201, a piston 202, and a piston rod 203. The piston 202 is located in the first cylinder 201 to cooperate with the first cylinder 201 to define an upper chamber 2011 and a lower chamber 2012. The piston rod 203 is connected to the piston 202 and an upper end of the piston rod 203 is configured to connect to the vehicle body. Multiple shock absorbers 200 are arranged in one-to-one correspondence with the multiple hydraulic integrated control modules 100. The external connection port 320 of each integrated base 32 is connected to the lower chamber 2012.

According to the hydraulic suspension system 1000 in the embodiments of the present disclosure, the oil channel 44 is integrated into the integrated base 32, so that the liquid reservoir 1 and the accumulator module are arranged on the integrated base 32 to connect to the oil channel 44. In this way, the oil channel 44, the liquid reservoir 1, and the accumulator module are integrated together to reduce the volume of the entire hydraulic integrated control module 100, no complex oil channels need to be connected, and leakage risks are reduced. When used in vehicles, the hydraulic suspension system effectively solves the contradiction between vehicle comfort and operation stability.

In some embodiments of the present disclosure, the oil inlet and outlet of the stiffness adjustment accumulator 10 are connected to the oil channel 44 through a first branch. The stiffness adjustment valve 11 is connected in series on the first branch. The stiffness adjustment valve 11 is configured to connect or disconnect the first branch.

The control valve 12 is connected in series on the oil channel 44 to control whether the oil flows to the shock absorber 200. When the stiffness adjustment valve 11 is opened and the control valve 12 is closed, the oil in the liquid reservoir 1 enters the stiffness adjustment accumulator 10 through the first branch to enable the stiffness adjustment accumulator 10 to store energy. When the stiffness adjustment valve 11 and the control valve 12 are both opened, the oil in the stiffness adjustment accumulator 10 can flow into the shock absorber 200, and the stiffness adjustment valve 11 and the control valve 12 are both configured to connect to a control unit 2000 of the vehicle.

Specifically, the hydraulic suspension system 1000 has a pressure boost mode. In the pressure boost mode, the stiffness adjustment valve 11 is opened and the control valve 12 is closed, and the oil in the liquid storage assembly enters the stiffness adjustment accumulator 10 to enable the stiffness adjustment accumulator 10 to store energy.

When a corresponding vehicle body needs to be lifted, for example, when the height of the entire vehicle body needs to be lifted, a control signal is received in each hydraulic control mode, the control unit 2000 controls the stiffness adjustment valve 11 and the control valve 12 in each hydraulic integrated control modules 100 to be both in the open state, and the oil in the stiffness adjustment accumulator 10 enters the lower chamber 2012 of the corresponding shock absorber 200, so that the oil in the lower chamber 2012 increases to push the piston 202 upward, and the piston 202 moves upward to drive the piston rod 203 to rise to lift the vehicle body, thereby completing the lifting function of the vehicle body. In some examples of this application, the hydraulic suspension system 1000 of this application can complete one lift after each energy storage. When lifting again, the stiffness adjustment accumulator 10 needs to store energy.

When the height of the vehicle body needs to be lowered, the oil in the lower chamber 2012 can also be discharged to the oil channel 44 under the action of vehicle gravity to flow back into the liquid storage assembly, thereby reducing the height of the vehicle body.

A vehicle encounters a variety of road conditions during driving. Once a suspension system of a vehicle in related art is selected, the suspension system cannot be adjusted while the vehicle is driving. Therefore, the traditional suspension can only ensure that the vehicle achieves optimal performance matching under specific road and speed conditions, and can only passively withstand the force of the ground on the vehicle body, and cannot change suspension parameters according to different roads and vehicle speeds, let alone actively control force of the ground on the vehicle body.

According to the hydraulic suspension system 1000 according to the embodiments of the present disclosure, the height of the vehicle body can be adjusted according to road conditions or the like. For example, when passing through a relatively rugged mountain road, the vehicle can enter the lift mode, which can improve the center of mass of the vehicle and improve vehicle driving stability. When it is necessary to reduce the impact of the vehicle body on the driving speed, it can enter the height reduction mode to lower the center of mass of the vehicle. Certainly, it can be understood that the above is only an exemplary description, and the height of the vehicle body can also be adjusted according to actual needs during driving.

When the stiffness needs to be increased, the stiffness adjustment valve 11 can be closed, causing the stiffness adjustment accumulator 10 to be disconnected from the shock absorber 200, thereby increasing the stiffness of the hydraulic integrated control module 100. For example, the front axle needs to provide greater stiffness in an anti-dive condition during brake and a cornering anti-roll condition. In this case, the stiffness adjustment valve 11 of the left front hydraulic integrated control module 100 can be closed and the stiffness adjustment valve 11 of the right front hydraulic integrated control module 100 can be closed.

It can be understood that since each hydraulic integrated control module 100 includes a stiffness adjustment accumulator 10, a stiffness adjustment valve 11 and a control valve 12, the stiffness adjustment valve 11 and the control valve 12 of each hydraulic integrated control module 100 are both electrically connected to the control unit 2000. Therefore, each hydraulic integrated control module 100 can be independently controlled, that is, the left front vehicle body can be lifted separately, and the left front vehicle body and the right front vehicle body can be lifted separately, or the like, which can be selected according to actual needs.

During the driving of the vehicle, when a left front wheel encounters an obstacle such as a raised stone, the piston rod 203 of the left front hydraulic integrated control module 100 moves downward to squeeze the lower chamber 2012, and the oil in the lower chamber 2012 is discharged to a corresponding liquid storage assembly. In this case, the control unit 2000 can control the stiffness adjustment valves 11 and the control valves 12 in the right front hydraulic integrated control module 100, the left rear hydraulic integrated control module 100, and the right rear hydraulic integrated control module 100 to be in an open state, and control the right front vehicle body, the right rear vehicle body, and the left rear vehicle body to be raised to avoid roll.

When the vehicle brakes suddenly in an emergency condition during driving, dive is likely to occur as a form of pitch. In this case, the control unit 2000 can control the stiffness adjustment valves 11 and the control valves 12 in the left front hydraulic integrated control module 100 and the right front hydraulic integrated control module 100 to be both in an open state to raise the left front vehicle body and the right front vehicle body, so that the purpose of anti-dive can be achieved.

It should be noted that the above is only two exemplary descriptions. During the driving of the vehicle, the open and closed states of the stiffness adjustment valve 11 and the control valve 12 of each hydraulic integrated control module 100 can be controlled according to a vehicle speed, a road condition, the need to anti-lift when starting the vehicle, and the need to anti-dive when braking suddenly, or the like, to meet various needs.

In some specific examples of this application, an automatic height adjustment mode includes: a vehicle height in a moving state changes with a vehicle speed according to a set program, load balancing, a trailer mode, a towed mode, a jack mode, an automatic height suppression function, a mode of lifting the vehicle body to escape, and the like. The vehicle height can be raised in the trailer mode, and the vehicle height can be lowered in the towed mode.

The hydraulic suspension system 1000 according to the embodiments of the present disclosure includes multiple independently controlled hydraulic integrated control modules 100, and can adjust the height of the vehicle body and the suspension stiffness at different positions according to the actual condition, so that the hydraulic suspension system 1000 can meet different needs and can achieve anti-roll and anti-pitch, can improve the operation stability of the vehicle and effectively solve the contradiction between vehicle comfort and operation stability.

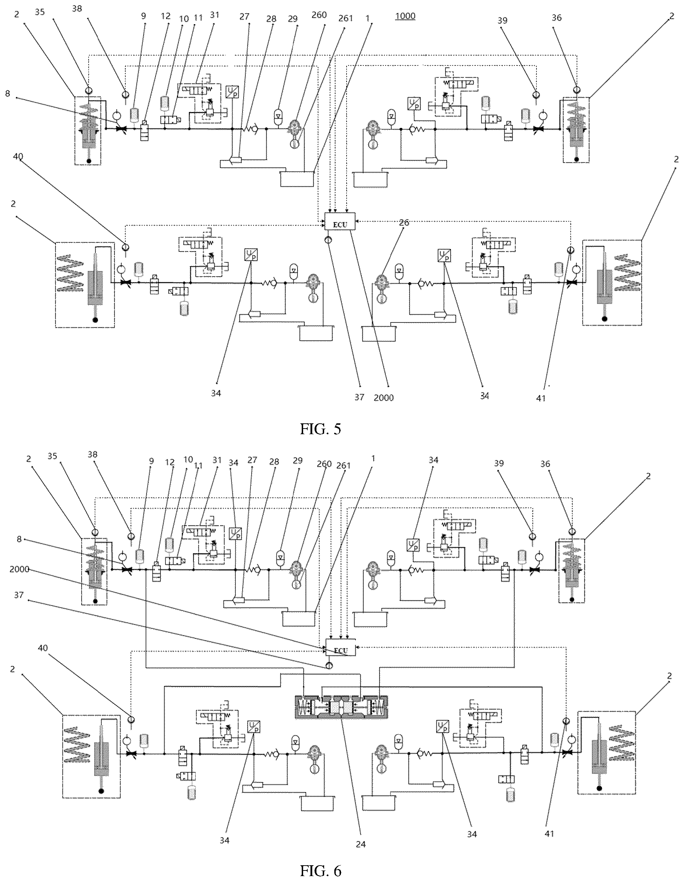

According to some embodiments of the present disclosure, as shown in FIG. 5 and FIG. 6, the hydraulic suspension system 1000 also includes a pressure relief valve 31, the pressure relief valve 31 is connected to the oil channel 44, that is, the pressure relief valve 31 is located at an outlet end of the control pump 26. When the pressure at the liquid outlet of the control pump 26 reaches a threshold, the pressure relief valve 31 opens to relieve the pressure, thereby protecting the hydraulic suspension system 1000 within a normal pressure range. It should be noted that the working principle of the pressure relief valve 31 is related art and will not be described in detail here. In some examples of the present disclosure, as shown in FIG. 5 and FIG. 6, each hydraulic integrated control module 100 includes a pressure sensor 34. The pressure sensor 34 is configured to detect the pressure at the outlet end of the control pump 26 to ensure that when the pressure at the liquid outlet of the control pump 26 reaches a threshold, this can be detected in time to ensure that the hydraulic suspension system 1000 is within a normal pressure range.

In some embodiments of the present disclosure, as shown in FIG. 5 to FIG. 8, each piston rod 203 is provided with an oil liquid channel 204. The oil liquid channel 204 is connected to the lower chamber 2012, and the oil channel 44 is connected to the piston rod 203. Therefore, the oil liquid channel 204 is defined by arranging the hollow piston rod 203. The oil in the liquid reservoir 1 can enter the lower chamber 2012 through the oil liquid channel 204, and the oil from the lower chamber 2012 can be discharged from the shock absorber 200 through the oil liquid channel 204, so that on the basis of ensuring that the oil can flow in and out of the shock absorber 200 smoothly, the weight of the shock absorber 200 can be reduced, costs can also be reduced, the adjustment method is simple, the reliability is high, and the response speed is fast.

It can be understood that each hydraulic integrated control module 100 can adjust the damping according to actual needs, that is, four hydraulic integrated control modules 100 can adjust the damping at the same time, or one hydraulic integrated control module, two hydraulic integrated control modules or three hydraulic integrated control modules can adjust the damping.

In some examples of this application, the hydraulic suspension system 1000 requires damping adjustment in the following modes: hammer sensitivity control, large-amplitude control, roll control, anti-dive anti-lift control, and high speed control. The hammer sensitivity control is mainly triggered when undulations on the road are small and do not reach the off-road condition. In order to cope with the small undulations, the damping is not increased, mainly to ensure the vehicle body comfort. The large-amplitude control is mainly triggered in off-road conditions with large undulations on the road. At low speeds, the undulations are very large and the damping is increased to ensure vehicle body control stability. The roll control is mainly triggered during cornering to change a damping force to reduce roll. When the control unit 2000 recognizes that the lateral acceleration is greater than a certain value (for example, greater than 0.2g), the outer damping is increased during roll. This operation is maintained for a certain period of time (for example, for 0.5 seconds), and the height change function is inhibited at this time. The anti-dive control is mainly triggered to change a damping force during braking for anti-dive. When the control unit 2000 recognizes that the acceleration is greater than a certain value (for example, greater than 0.2g), the control unit suppresses the height change, increases the front side damping and increases the front side stiffness during dive. The altitude suppression function maintains for 1 second until the acceleration falls below a certain value (for example, below 0.2g). The anti-lift control is mainly triggered to change a damping force during acceleration for anti-dive, thereby increasing rear damping during acceleration. The high-speed control is mainly triggered to change the damping force with the vehicle speed, that is, the damping is small at a low speed and large at a high speed.

In some examples of this application, a metal corrugated pipe accumulator is used as the damping accumulator 9, and a diaphragm accumulator is used as the stiffness adjustment accumulator 10. The diaphragm accumulator has a faster pressure storage capacity and a higher pressure storage quantity than the metal corrugated pipe accumulator. The diaphragm accumulator can achieve a higher pressure storage quantity in a shorter period of time; therefore, the diaphragm accumulator is used as the stiffness adjustment accumulator 10 to store pressure for each suspension to achieve vehicle body lifting. It should be noted that the energy storage principles of metal corrugated pipe accumulators and diaphragm accumulators are both related art and will not be described in detail here.

As shown in FIG. 6, in some embodiments of the present disclosure, the hydraulic suspension system 1000 also includes a central control cylinder 24, where the central control cylinder 24 includes a second cylinder 240 and a moving part 241. The moving part 241 is movably provided in the second cylinder 240 and cooperates with the second cylinder 240 to define a first chamber 243, a second chamber 244, a third chamber 245 and a fourth chamber 246. The first chamber 243, the second chamber 244, the third chamber 245 and the fourth chamber 246 are sequentially arranged in the moving direction of the moving part 241. The first chamber 243 and the second chamber 244 are distributed on one side of a middle contact part 2411 of the moving part 241, the third chamber 245 and the fourth chamber 246 are distributed on the other side of the middle contact part 2411, and the middle contact part 2411 moves in cooperation with the inner wall of the second cylinder 240.

The oil channel 44 of the left front hydraulic integrated control module 100 is connected to one of the first chamber 243 and the second chamber 244, and the corresponding oil channel 44 of the right rear hydraulic integrated control module 100 is connected to the other of the first chamber 243 and the second chamber 244. The corresponding oil channel 44 of the right front hydraulic integrated control module 100 is connected to one of the third chamber 245 and the fourth chamber 246, and the corresponding oil channel 44 of the left rear hydraulic integrated control module 100 is connected to the other of the third chamber 245 and the fourth chamber 246. For the convenience of description below, an example in which the oil channel 44 of the left front hydraulic integrated control module 100 is connected to the first chamber 243, the oil channel 44 of the right rear hydraulic integrated control module 100 is connected to the second chamber 244, the oil channel 44 of the left rear hydraulic integrated control module 100 is connected to the third chamber 245, and the oil channel 44 of the right front hydraulic integrated control module 100 is connected to the fourth chamber 246 is used to describe the principle.

To this end, the integrated control module is also provided with a connection port connected to the central control cylinder.

Specifically, when the vehicle has a tendency to roll, for example, the piston rods 203 corresponding to the left front hydraulic integrated control module 100 and the left rear hydraulic integrated control module 100 are compressed, oil in the lower chamber 2012 corresponding to the left front hydraulic integrated control module 100 is discharged to the first chamber 243 through the oil liquid channel 204, and oil in the lower chamber 2012 corresponding to the left rear hydraulic integrated control module 100 is discharged to the third chamber 245 through the oil liquid channel 204. Since the first chamber 243 and the third chamber 245 are located on two sides of the middle contact part 2411, a direction of a force exerted by the oil in the first chamber 243 on the middle contact part 2411 is opposite to that of a force exerted by the third chamber 245 on the middle contact part 2411. The forces in the two opposite directions cancel each other so that the moving part 241 does not move, thereby inhibiting the movement of the piston rod 203 corresponding to the left front hydraulic integrated control module 100 and the piston rod 203 corresponding to the left rear hydraulic integrated control module 100, which can inhibit roll.

When the left front wheel of the vehicle encounters an obstacle such as a stone, and the left front wheel is raised so that a compression amplitude corresponding to the left front hydraulic integrated control module 100 is greater than a compression amplitude corresponding to the left rear hydraulic integrated control module 100, the amount of oil discharged from the left front hydraulic integrated control module 100 to the first chamber 243 is greater than the amount of oil discharged from the left rear hydraulic integrated control module 100 to the third chamber 245, thereby causing the moving part 241 to move to the right to squeeze the third chamber 245 and the fourth chamber 246. The oil in the third chamber 245 can be discharged to the corresponding lower chamber 2012 of the left rear hydraulic integrated control module 100 to cause the piston rod 203 to move upward. The oil in the fourth chamber 246 can be discharged to the corresponding lower chamber 2012 of the right front hydraulic integrated control module 100 to cause the piston rod 203 to move upward, thereby reducing the risk of the left rear wheel and the right front wheel coming off the ground and improving the stability of the vehicle.

Certainly, it can be understood that the above conditions are only illustrative descriptions. When the vehicle encounters other working conditions, such as the right front wheel is raised, or the left rear wheel is raised, the oil flows according to the above linkage principle to avoid the vehicle from rolling. Not all working condition are described in detail herein.

When an off-road vehicle passes through undulating roads, if the ground clearance and breakover angle are small, passability of the vehicle is affected. When climbing or leaving a slope, if the approach angle and departure angle are excessively small, the head and the tail of the vehicle are held up, preventing the vehicle from passing normally. When a vehicle drives on a side slope, an excessively steep side slope can easily cause the vehicle to slide or roll over, and driving safety cannot be ensured. When a vehicle turns and the lateral acceleration is excessively large or the vehicle is impacted by an external force during driving on a road, there is a risk of rollover. Due to the higher center of mass, off-road vehicles are more likely to roll over, making it more difficult to ensure their safety and stability. In response to driving requirements of the above complex and changeable terrain and road conditions, the hydraulic suspension system according to the embodiments of the present disclosure can adjust the vehicle body posture according to the road conditions through the central control cylinder 24, thereby improving adaptability of an off-road vehicle to all-terrain working conditions.

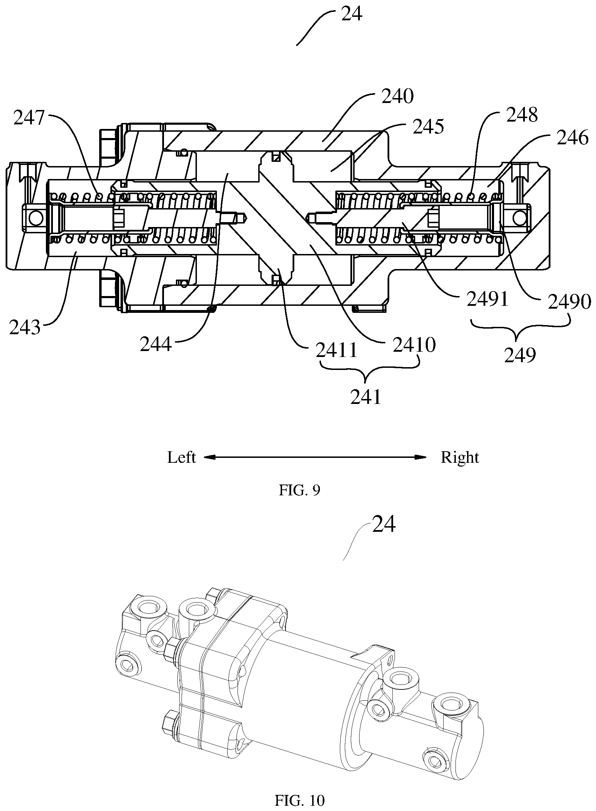

In some embodiments of the present disclosure, as shown in FIG. 9, the moving part 241 includes a moving body part 2410, and the intermediate contact part 2411 is an annular protrusion provided on the moving body part 2410. In the moving direction of the moving part 241, the second cylinder 240 is provided with a middle cavity, a left cavity and a right cavity. Extension openings of the left cavity and the right cavity are located on the inner wall of the middle cavity. A left end of the moving body part 2410 extends into the left cavity through the extension opening of the left cavity, and a right end of the moving body part 2410 extends into the right cavity through the extension opening of the right cavity.

The first chamber 243 is defined between the left end part of the moving body part 2410 and the left cavity. A part of the moving body part 2410 is in sliding fit with the inner wall of the left cavity, the middle contact part 2411 is in sliding fit with the inner wall of the middle cavity to define the second chamber 244 and the third chamber 245, and the fourth chamber 246 is defined between the right end part of the moving body part 2410 and the right cavity. Therefore, the structure of the central control cylinder 24 is simple.

Optionally, as shown in FIG. 9, the central control cylinder 24 also includes a first return spring 247 and a second return spring 248. Two ends of the first return spring 247 are respectively stopped against the left ends of the second cylinder 240 and the moving part 241. Two ends of the return spring 248 are respectively stopped against the right ends of the second cylinder 240 and the moving part 241. The first return spring 247 and the second return spring 248 push the moving part 241 to return toward the middle. Specifically, when the vehicle rolls and the moving part 241 moves to the left, the first return spring 247 can push the moving part 241 to the right to return the moving part 241. When the vehicle rolls and the moving part 241 moves to the right, the second return spring 248 can push the moving part 241 to the left to return the moving part 241, thereby ensuring the reliability of the central control cylinder 24.

In some examples of the present disclosure, as shown in FIG. 9, the central control cylinder 24 includes a guide component 249. The guide component includes a first guide piece 2490 and a second guide piece 2491, and the first guide piece 2490 is in sliding fit with the second guide piece 2491. The first guide piece 2490 is fixed on the second cylinder 240, the second guide piece 2491 is fixed on the moving part 241, the first return spring 247 is sleeved on the guide component 249 on the left and the first return spring 247 is stopped against the first guide piece 2490, and the second return spring 248 is sleeved on the guide component 249 on the right and the second return spring 248 is stopped against the first guide piece 2490. Therefore, arrangement of the guide component 249 not only facilitates the assembly of the first return spring 247 and the second return spring 248, and also facilitates limiting the deformation degree of the first return spring 247 and the second return spring 248, to avoid failure due to excessive deformation of the first return spring 247 and the second return spring 248.

Optionally, the second guide piece 2491 is a screw, and one end of the second guide piece 2491 extends into the first guide piece 2490 to move in cooperation with the first guide piece 2490, thereby making the structure of the guide component 249 simple and reliable.

As shown in FIG. 10, ports of the central control cylinder 24 connected to the piston rods 203 of the four hydraulic integrated control modules 100 are located on the same side, thereby facilitating pipeline connection.

As shown in FIG. 5 and FIG. 6, in some embodiments of the present disclosure, the hydraulic suspension system 1000 also includes multiple damping springs 205. The multiple damping springs 205 are arranged in one-to-one correspondence with the multiple shock absorbers. Two ends of the damping spring 205 are configured to connect to the vehicle body and the axle. Therefore, by arranging the damping spring 205, the buffering effect of each shock absorber can be increased and roll on the vehicle body during driving can be reduced. It can be understood that the hydraulic suspension system 1000 includes a shock absorber assembly 2, and each shock absorber assembly 2 includes a shock absorber 200 and a damping spring 205, thereby buffering the vehicle body through the shock absorber assembly 2.

Optionally, as shown in FIG. 5 and FIG. 6, the shock absorbing spring 205 of the left front hydraulic integrated control module 100 is fixedly sleeved on the shock absorber 200, the shock absorbing spring 205 of the right front hydraulic integrated control module 100 is fixedly sleeved on the shock absorber 200, the damping spring 205 of the left rear hydraulic integrated control module 100 is arranged in parallel with the shock absorber 200, and the damping spring 205 of the right rear hydraulic integrated control module 100 is arranged in parallel with the shock absorber 200.

The hydraulic suspension system 1000 according to two specific embodiments of the present disclosure will be described in detail below with reference to FIG. 5 and FIG. 6. It can be understood that each of the above embodiments is only an exemplary description, rather than a limiting description, and may be determined according to the actual condition. Exemplary modifications are made to each embodiment.

### Embodiment 1:

As shown in FIG. 5, the hydraulic suspension system 1000 according to the embodiment of the present disclosure includes a left front hydraulic integrated control module 100, a right front hydraulic integrated control module 100, a left rear hydraulic integrated control module 100, and a right rear hydraulic integrated control module 100. Optionally, each hydraulic integrated control module 100 includes: a liquid reservoir 1, a control pump 26, an oil return valve 27, a one-way valve 28, a pressure stabilizing accumulator 29, a pressure relief valve 31, a damping adjustment valve 8, a damping accumulator 9, a stiffness adjustment accumulator 10, and a pressure reducing accumulator 30.

The left front hydraulic integrated control module 100 and the right front hydraulic integrated control module 100 are each provided with a shock absorber 200 and a shock absorbing spring 205, and the shock absorbing spring 205 is fixedly sleeved on the shock absorber 200. The left rear hydraulic integrated control module 100 and the right rear hydraulic integrated control module 100 are each provided with a shock absorber 200 and a damping spring 205. The damping spring 205 and the shock absorber 200 are arranged side by side. Two ends of the shock absorber 205 corresponding to the left rear hydraulic integrated control module 100 are connected to the vehicle body and the axle respectively. Two ends of the damping spring 205 corresponding to the right rear hydraulic integrated control module 100 are connected to the vehicle body and the axle respectively. Each shock absorber 200 includes a first cylinder 201, a piston rod 203, and a piston 202. The piston rod 203 is connected to the piston 202. The piston 202 is movably arranged in the first cylinder 201 to define an upper chamber 2011 and a lower chamber 2012. The piston rod 203 is provided with an oil liquid channel 204, and the oil liquid channel 204 is connected to the lower chamber 2012.

The oil liquid channel 204 of each shock absorber 200 is connected to the liquid reservoir 1 through the oil channel 44. The control valve 12 is connected to the oil channel 44 to control its opening or closing.

The liquid reservoir 1 has a liquid outlet and a liquid inlet, and the control pump 26 is connected to the liquid outlet and the oil channel 44 respectively to guide the oil in the liquid reservoir 1 to the oil channel 44. The oil return valve 27 is connected to the liquid inlet and the oil channel 44 respectively. When the oil return valve 27 is opened, oil flows from the oil channel 44 to the liquid inlet. The one-way valve 28 is provided at the outlet end of the control pump 26 and provides one-way communication. The pressure stabilizing accumulator 29 is provided at the outlet end of the control pump 26 and is located between the one-way valve 28 and the control pump 26. The pressure stabilizing accumulator 29 can stabilize and eliminate flow fluctuations at the outlet end of the control pump 26.

The pressure relief valve 31 is connected to the oil channel 44.

The stiffness adjustment accumulator 10 corresponding to each hydraulic integrated control module 100 is connected to the oil channel 44. The oil inlet and outlet of the stiffness adjustment accumulator 10 are provided with a stiffness adjustment valve 11, and the stiffness adjustment valve 11 is normally in a closed state.

Each oil channel 44 is also provided with a damping adjustment valve 8, a damping accumulator 9, and a control valve 12. The damping adjustment valve 8 is configured to adjust a flow that passes through the corresponding oil channel 44 to adjust the damping of the hydraulic suspension system 1000. The damping accumulator 9 can store energy. The control valve 12 is arranged between the damping accumulator 9 and the stiffness adjustment accumulator 10.

Specifically, the hydraulic suspension system 1000 has a pressure boost mode, a lifting mode, and a height lowering mode. In the pressure boost mode, the control valve 12 is closed, the stiffness adjustment valve 11 is opened, and the control pump 26 is operated so that the oil in the liquid reservoir 1 flows to the corresponding stiffness adjustment accumulator 10 to store energy. The stiffness adjustment valve 11 is closed after each stiffness adjustment accumulator 10 stores energy.

In the lifting mode, the oil in the liquid reservoir 1 or the oil in the stiffness adjustment accumulator 10 can enter the corresponding oil liquid channel 204, and the hydraulic oil entering each oil liquid channel 204 flows into the lower chamber 2012, so that the hydraulic pressure in the lower chamber 2012 increases and the piston 202 moves upward. The upward movement of the piston 202 drives the piston rod 203 to move upward. The piston rod 203 of the left front hydraulic integrated control module 100 moves upward, the piston rod 203 of the right front hydraulic integrated control module 100 moves upward, the piston rod 203 of the left rear hydraulic integrated control module 100 moves upward, and the piston rod 203 of the right rear hydraulic integrated control module 100 moves upward, to drive the vehicle body to move upward to achieve the purpose of lifting the vehicle body.

In the height lowering mode, the oil of each hydraulic integrated control module 100 flows out of the oil liquid channel 204, and the hydraulic pressure of the lower chamber 2012 of each shock absorber 200 is reduced so that the piston 202 moves downward, and the downward movement of the piston 202 drives the piston rod 203 to move downward. The piston rod 203 of the left front hydraulic integrated control module 100 moves downward, the piston rod 203 of the right front hydraulic integrated control module 100 moves downward, the piston rod 203 of the left rear hydraulic integrated control module 100 moves downward, and the piston rod 203 of the right rear hydraulic integrated control module 100 moves downward, to drive the vehicle body to move downward to achieve the purpose of lowering the height of the vehicle body. When the pressure in the hydraulic suspension system 1000 is relatively high, for example, it is detected that the pressure at the outlet of the control pump 26 reaches a certain threshold (30MPa), the oil return valve 27 is opened to relieve pressure to protect the hydraulic suspension system 1000 within the normal pressure range. In this case, the oil in each shock absorber 200 can flow to the liquid reservoir 1 through the oil channel 44 and the oil return valve 27.

If the pressure in the hydraulic suspension system 1000 is still high after pressure relief or the pressure is high during operation, the pressure relief valve 31 can be opened to perform pressure relief to ensure the reliable operation of the entire hydraulic suspension system 1000.

During the driving of the vehicle, if the damping of the hydraulic suspension system 1000 is large, the vehicle body is bumpy and the comfort is affected. The amount of oil in the oil channel 44 can be adjusted through the damping adjustment valve 8 to adjust damping of the hydraulic suspension system 1000. When the opening of the damping adjustment valve 8 decreases so that the amount of oil that can flow through the oil channel 44 decreases, a part of the oil in the oil channel 44 can enter the damping accumulator 9 to store energy. When the opening of the damping adjustment valve 8 increases, the oil in the damping accumulator 9 can enter the oil channel 44 for oil replenishment, so that the damping of the hydraulic suspension system 1000 can be reliably adjusted.

When the stiffness of the hydraulic suspension system 1000 is large and reduces the comfort of the vehicle, the stiffness adjustment valve 11 can be controlled to open, and the oil in the stiffness adjustment accumulator 10 can be replenished into each oil channel 44, thereby reducing the stiffness of the hydraulic suspension system 1000 and increasing the buffering effect of the hydraulic suspension system 1000 against bumps.

### Embodiment 2:

As shown in FIG. 6, in this embodiment, compared with Embodiment 1, the hydraulic suspension system 1000 according to the embodiment of the present disclosure further includes a central control cylinder 24.

The central control cylinder 24 includes a second cylinder 240 and a moving part 241. The moving part 241 is movably provided in the second cylinder 240 and cooperates with the second cylinder 240 to define a first chamber 243, a second chamber 244, a third chamber 245 and a fourth chamber 246. The first chamber 243, the second chamber 244, the third chamber 245 and the fourth chamber 246 are sequentially arranged in the moving direction of the moving part 241. The first chamber 243 and the second chamber 244 are distributed on one side of a middle contact part 2411 of the moving part 241, the third chamber 245 and the fourth chamber 246 are distributed on the other side of the middle contact part 2411, and the middle contact part 2411 moves in cooperation with the inner wall of the second cylinder 240.

The corresponding oil liquid channel 204 of the left front hydraulic integrated control module 100 is connected to one of the first chamber 243 and the second chamber 244, and the corresponding oil liquid channel 204 of the right rear hydraulic integrated control module 100 is connected to the other of the first chamber 243 and the second chamber 244. The corresponding oil liquid channel 204 of the left rear hydraulic integrated control module 100 is connected to one of the third chamber 245 and the fourth chamber 246, and the corresponding oil liquid channel 204 of the right front hydraulic integrated control module 100 is connected to the other of the third chamber 245 and the fourth chamber 246. For the convenience of description below, an example in which the corresponding oil liquid channel 204 of the left front hydraulic integrated control module 100 is connected to the first chamber 243, the corresponding oil liquid channel 204 of the right rear hydraulic integrated control module 100 is connected to the second chamber 244, the corresponding oil liquid channel 204 of the left rear hydraulic integrated control module 100 is connected to the third chamber 245, and the corresponding oil liquid channel 204 of the right front hydraulic integrated control module 100 is connected to the fourth chamber 246 is used to describe the principle.

Specifically, when the vehicle has a tendency to roll, for example, the piston rods 203 corresponding to the left front hydraulic integrated control module 100 and the left rear hydraulic integrated control module 100 are compressed, and the piston rods 203 corresponding to the left front hydraulic integrated control module 100 and the left rear hydraulic integrated control module 100 are extended, oil in the lower chamber 2012 corresponding to the left front hydraulic integrated control module 100 is discharged to the first chamber 243 through the oil liquid channel 204, and oil in the lower chamber 2012 corresponding to the left rear hydraulic integrated control module 100 is discharged to the third chamber 245 through the oil liquid channel 204. Since the first chamber 243 and the third chamber 245 are located on two sides of the middle contact part 2411, a direction of a force exerted by the oil in the first chamber 243 on the middle contact part 2411 is opposite to that of a force exerted by the third chamber 245 on the middle contact part 2411. The forces in the two opposite directions cancel each other so that the moving part 241 does not move, thereby inhibiting the movement of the piston rod 203 corresponding to the left front hydraulic integrated control module 100 and the piston rod 203 corresponding to the left rear hydraulic integrated control module 100, which can inhibit roll.

When the left front wheel of the vehicle encounters an obstacle such as a stone, and the left front wheel is raised so that a compression amplitude corresponding to the left front hydraulic integrated control module 100 is greater than a compression amplitude corresponding to the left rear hydraulic integrated control module 100, the amount of oil discharged from the left front hydraulic integrated control module 100 to the first chamber 243 is greater than the amount of oil discharged from the left rear hydraulic integrated control module 100 to the third chamber 245, thereby causing the moving part 241 to move to the right to squeeze the third chamber 245 and the fourth chamber 246. The oil in the third chamber 245 can be discharged to the lower chamber 2012 of the left rear hydraulic integrated control module 100 to cause the piston rod 203 to move upward. The oil in the fourth chamber 246 can be discharged to the lower chamber 2012 of the right front hydraulic integrated control module 100 to cause the piston rod 203 to move upward, thereby reducing the risk of the left rear wheel and the right front wheel coming off the ground and improving the stability of the vehicle.

Certainly, it can be understood that the above conditions are only illustrative descriptions. When the vehicle encounters other working conditions, such as the right front wheel is raised, or the left rear wheel is raised, the oil flows according to the above linkage principle to avoid the vehicle from rolling. Not all working condition are described in detail herein.

The vehicle according to this embodiment of the present disclosure includes the hydraulic suspension system 1000 according to any foregoing embodiment of the present disclosure.

In some specific examples of this application, the vehicle can have an entertainment mode, and can quickly change the vehicle posture (lower or raise the vehicle body) according to the entertainment (movie, disco, and music) content to obtain the acceleration required in a corresponding state. In some examples of this application, the vehicle may have a pre-collision suspension control function, which is combined with a radar/camera. When the control unit 2000 senses a pre-collision signal, the control unit actively controls front suspension stiffness to increase, changes a pitch angle, optimizes friction resistance, and reduces a brake distance. In some examples of this application, the vehicle can have a suspension memory function and a road condition memory function, which are combined with a navigation map, to automatically switch to a previous control strategy (manually adjust the memory) the next time the vehicle passes a specific road section. In some examples of this application, the vehicle can drive despite wheel blowout, and after a single wheel blows out, the vehicle can still travel a certain distance safely.

In some examples of this application, the vehicle is provided with control keys, and the vehicle user can manually control operating states of the control valve 12 and the stiffness adjustment valve 11 in each hydraulic integrated control module 100 through the control keys, so that the vehicle can switch between multiple modes.

According to the vehicle according to the embodiments of the present disclosure, the height of the vehicle body can be adjusted according to road conditions or the like. For example, when passing through a relatively rugged mountain road, the vehicle can enter the lift mode, which can improve the center of mass of the vehicle and improve vehicle driving stability. When it is necessary to reduce the impact of the vehicle body on the driving speed, it can enter the height reduction mode to lower the center of mass of the vehicle. Certainly, it can be understood that the above is only an exemplary description, and the height of the vehicle body can also be adjusted according to actual needs during driving.

The vehicle according to the embodiments of the present disclosure includes multiple independently controlled hydraulic integrated control modules 100, and can adjust the height of the vehicle body and the suspension stiffness at different positions according to the actual condition, so that the hydraulic suspension system 1000 can meet different needs and can achieve anti-roll and anti-pitch, can improve the operation stability of the vehicle and effectively solve the contradiction between vehicle comfort and operation stability. The oil channel 44 is integrated into the integrated base 32, so that the liquid reservoir 1 and the accumulator module are arranged on the integrated base 32 to connect to the oil channel 44. In this way, the oil channel 44, the liquid reservoir 1, and the accumulator module are integrated together to reduce the volume of the entire hydraulic integrated control module 100, no complex oil channels need to be connected, and leakage risks are reduced.

In some embodiments of the present disclosure, the vehicle further includes: a left front acceleration sensor 35, a right front acceleration sensor 36, and a rear vehicle body acceleration sensor 37, where the left front acceleration sensor 35, the right front acceleration sensor 36, and the rear vehicle body acceleration sensor 37 are respectively connected to the control unit 2000, and the control unit 2000 controls open and closed states of the stiffness adjustment valve 11 and the control valve 12 according to detection results of the left front acceleration sensor 35, the right front acceleration sensor 36, and the rear vehicle body acceleration sensor 37. As a result, the height and suspension stiffness of the vehicle body at different positions can be adjusted in real time according to the actual condition, effectively resolving the contradiction between vehicle comfort and operation stability. The above independent adjustment method can effectively improve the active safety of the vehicle.

In some embodiments of the present disclosure, the vehicle further includes: a left front horizontal height sensor 38, a right front horizontal height sensor 39, a left rear horizontal height sensor 40, and a right rear horizontal height sensor 41, where the left front horizontal height sensor 38, the right front horizontal height sensor 39, the left rear horizontal height sensor 40, and the right rear horizontal height sensor 41 are respectively configured to detect the height of the corresponding position of the vehicle body, the left front horizontal height sensor 38, the right front horizontal height sensor 39, the left rear horizontal height sensor 40, and the right rear horizontal height sensor 41 are respectively connected to the control unit 2000, and the control unit 2000 controls open and closed states of the stiffness adjustment valve 11 and the control valve 12 according to detection results. As a result, the height of the vehicle body at different positions can be adjusted in real time according to the actual condition, effectively resolving the contradiction between vehicle comfort and operation stability. The above independent adjustment method can effectively improve the active safety of the vehicle.

In some embodiments of the present disclosure, when the control unit 2000 recognizes that the lateral acceleration is greater than a certain value (for example, greater than 0.2g), the outer damping is increased during roll. This operation is maintained for a certain period of time (for example, for 0.5 seconds), and the height change function is inhibited at this time. The anti-dive control is mainly triggered to change a damping force during braking for anti-dive. When the control unit 2000 recognizes that the acceleration is greater than a certain value (for example, greater than 0.2g), the control unit suppresses the height change, increases the front side damping and increases the front side stiffness during dive. The altitude suppression function maintains for 1 second until the acceleration falls below a certain value (for example, below 0.2g). The anti-lift control is mainly triggered to change a damping force during acceleration for anti-dive, thereby increasing rear damping during acceleration.

In the description of this application, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of this application.

In addition, terms "first" and "second" are used merely for the purpose of description, and shall not be construed as indicating or implying relative importance or implying a quantity of indicated technical features. Therefore, a feature limited by "first" or "second" may explicitly or implicitly include one or more of the features. In the descriptions of this application, "multiple" means two or more, unless otherwise definitely and specifically limited.

In this application, unless otherwise explicitly specified or defined, the terms such as "install", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two components, or an interaction relationship between two components. A person of ordinary skill in the art may understand the specific meanings of the foregoing terms in this application according to specific conditions.

In this application, unless otherwise explicitly specified or defined, the first feature being located "above" or "below" the second feature may be the first feature being in a direct contact with the second feature, or the first feature being in an indirect contact with the second feature through an intermediary. In addition, that the first feature is "above", "over", or "on" the second feature may indicate that the first feature is directly above or obliquely above the second feature, or may merely indicate that the horizontal position of the first feature is higher than that of the second feature. That the first feature is "below", "under", and "beneath" the second feature may be that the first feature is right below the second feature or at an inclined bottom of the second feature, or may merely indicate that the horizontal position of the first feature is lower than that of the second feature.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of this application. In this specification, schematic descriptions of the foregoing terms are not necessarily directed at the same embodiment or example. Besides, the specific features, the structures, the materials or the characteristics that are described may be combined in proper manners in any one or more embodiments or examples. In addition, a person skilled in the art may integrate or combine different embodiments or examples described in the specification and features of the different embodiments or examples as long as they are not contradictory to each other.

Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1. A hydraulic integrated control module, comprising:
an integrated base, the integrated base being provided with an oil channel, an outer peripheral wall of the integrated base is provided with an external connection port connected to the oil channel, and the external connection port being configured to connect to a shock absorber;
a liquid reservoir, the liquid reservoir being arranged on the integrated base, and the liquid reservoir being connected to the oil channel;
a control valve, connected in series in the oil channel to control connection or disconnection of the oil channel; and
an accumulator module, the accumulator module being arranged on the integrated base, the accumulator module being connected to the oil channel, and the accumulator module being configured to adjust an amount of oil in the oil channel.

2. The hydraulic integrated control module according to claim 1, wherein the integrated base is provided with a first branch, and the first branch is connected to the oil channel; and
the accumulator module comprises a stiffness adjustment accumulator and a stiffness adjustment valve, the stiffness adjustment valve is connected in series on the first branch to connect or disconnect the first branch, and the stiffness adjustment accumulator is arranged on the integrated base and is connected to the first branch.

3. The hydraulic integrated control module according to claim 2, wherein the stiffness adjustment accumulator is arranged on an arrangement plane of the liquid reservoir on the integrated base.

4. The hydraulic integrated control module according to any one of claims 1 to 3, wherein the accumulator module comprises a damping adjustment valve and a damping accumulator, and the damping adjustment valve is connected in series to the oil channel to adjust damping of the oil channel; and
the damping accumulator is arranged on the integrated base and is connected to the oil channel.

5. The hydraulic integrated control module according to claim 4, wherein an arrangement plane of the damping accumulator on the integrated base is perpendicular to the arrangement plane of the liquid reservoir on the integrated base, and the damping accumulator and the damping adjustment valve are located on a same arrangement plane.

6. The hydraulic integrated control module according to any one of claims 1 to 5, wherein the integrated base is provided with a third branch and a fourth branch, the third branch is connected to the oil channel and a liquid outlet of the liquid reservoir, the fourth branch is connected to the oil channel and a liquid inlet of the liquid reservoir, and a control pump is provided on the third branch to guide oil in the liquid reservoir to the oil channel.

7. The hydraulic integrated control module according to claim 6, wherein an oil return valve for connecting or disconnecting the fourth branch is connected in series on the fourth branch.

8. The hydraulic integrated control module according to claim 6 or 7, wherein a one-way valve is provided on the third branch, and the one-way valve is configured to unidirectionally guide oil to the oil channel.

9. The hydraulic integrated control module according to any one of claims 6 to 8, wherein a pressure stabilizing accumulator is provided on the third branch, and the pressure stabilizing accumulator is arranged on the integrated base and is arranged on the arrangement plane of the liquid reservoir on the integrated base.

10. The hydraulic integrated control module according to any one of claims 1 to 9, further comprising a signal receiver, the signal receiver being arranged on the integrated base, and the signal receiver cooperating with the control valve to control an operating state of the control valve.

11. The hydraulic integrated control module according to claim 10, wherein the control valve is a solenoid valve and the signal receiver is a coil.

12. A hydraulic suspension system, comprising:
a plurality of hydraulic integrated control modules, the hydraulic integrated control module being the hydraulic integrated control module according to any one of claims 1 to 11; and
a plurality of shock absorbers, the shock absorber comprising a first cylinder, a piston, and a piston rod, the piston being located in the first cylinder to cooperate with the first cylinder to define an upper chamber and a lower chamber, the piston rod being connected to the piston and an upper end of the piston rod being configured to connect to a vehicle body, the plurality of shock absorbers being arranged in one-to-one correspondence with the plurality of hydraulic integrated control modules, and the external connection port of each of the integrated bases being connected to the lower chamber.

13. A vehicle, comprising:
a vehicle body and a control unit; and
a hydraulic suspension system, the hydraulic suspension system being the hydraulic suspension system according to claim 12, the upper end of each piston rod being connected to the vehicle body, and the control valves of the plurality of hydraulic integrated control modules being respectively connected to the control unit of the vehicle.
